# EUROPÄISCHE PATENTANMELDUNG

(11) **EP 1 089 026 A2**
(43) Veröffentlichungstag der Anmeldung: **04.04.2001**
(21) Anmeldenummer: 00117711.2
(22) Anmeldetag: 17.08.2000
(51) Int. Cl.: F16J 9/20

(54) **Ölabstreifkolbenring**

(30) Priorität: 01.10.1999 DE 19947183
(71) Anmelder: Federal-Mogul Burscheid GmbH, 51399 Burscheid (DE)
(72) Erfinder: Esser, Peter-Klaus, 51515 Kürten (DE); Sichelschmidt, Martin, 58256 Ennepetal (DE)

(57) **Zusammenfassung**

Die Erfindung betrifft einen Ölabstreifkolbenring (3) mit einem geschlitzten Ringträger (5, 5'), in dem in drei Ringnuten (6, 6', 6'') Stahlbandlamellen (7) angeordnet sind. Die Ringnuten verlaufen unter einem definierten Winkel Alpha zur Kolbenringachse (A).

## Beschreibung

Die Erfindung betrifft einen Ölabstreifkolbenring für Brennkraftmaschinen mit einem geschlitzten Ringträger für Kolbenringe.

Brennkraftmaschinen werden üblicherweise mit einer Kolbenring-Kombination ausgestattet, welche aus drei unterschiedlichen Kolbenringen besteht, nämlich aus einem ersten und zweiten Kompressionsring und einem Ölabstreifring. Bei modernen hochdrehenden Motoren wird letzterer vielfach aus mehreren Einzelteilen zusammengesetzt.
Die DE 4027 071 C2 offenbart beispielsweise einen Ölabstreifkolbenring bestehend aus zwei Stahllamellen und einer, die Stahllamellen gegen die Zylinderwand pressenden Spreizfeder. Die Funktion der Stahllamellen wird dabei von der Bauart der Spreizfeder beeinflußt.
Das Problem bei derartigen Ölabstreifkolbenringen liegt dabei in der Montage der Einzelteile auf den Kolben. Jedes Teil wird einzeln verbaut und kann dabei erst unmittelbar vor dem Einsetzen des Kolbens in den Zylinder eingebaut werden, da sonst die Gefahr besteht, dass die Einzelteile während des Transportes aus der Ringnut des Kolbens herausfallen.

Der Erfindung liegt die Aufgabe zugrunde, einen aus mehreren Einzelteilen bestehenden Ölabstreifkolbenring im Hinblick auf die Montagefreundlichkeit zu verbessern, wobei gleichzeitig die Funktion verbessert wird.
Diese Aufgabe wird erfindungsgemäß durch die Merkmale des Patentanspruch 1 gelöst.

Die Erfindung geht dabei von an sich bereits bestehenden Ringträgern aus, wie sie beispielsweise aus der DE PS 1013 477 bekannt sind. Derartige Ringträger wurden eingesetzt, um Kolbenringe mit einem im wesentlichen halbkreisförmigen Querschnitt in Kolbenringnuten mit rechteckigem Querschnitt einsetzen zu können.

Der erfindungsgemäße Ringträger ist so ausgelegt, dass er mindestens drei Stahllamellen aufnehmen kann. Ein solcher Ringträger ist im konstruktiven Aufbau wesentlich einfächer herzustellen als eine Spreizfeder. Dadurch, dass die Kolbenringe in Ringnuten des Ringträgers angeordnet sind, können sie während des Transportes nicht herausfallen. Je nach Anforderung können eine Vielzahl an Stahllamellen verwendet werden. Durch die Verwendung von mindestens drei Stahllamellen ist es möglich, den einzelnen Lamellen unterschiedliche Aufgaben zukommen zu lassen.
So können zwei Lamellen als Ölabstreifer fungieren, während die dritte Lamelle als Kompressionsring ausgelegt ist.
Auf diese Weise kann der sonst übliche zweite Kompressionsring entfallen.
Mit Hilfe des erfindungsgemäßem Ringträgers wird ein wesentlich vielseitigeres Kolbenringsystem bereit gestellt als bisher, ohne dass die anschließende Montage auf den Kolben erschwert wird.
Darüber hinaus liegt der Vorteil darin, dass der Kolbenringhersteller dem Kolbenhersteller ein leicht handhabbares Bauteil zur Verfügung stellen kann, welches als einteiliges Komplettbauteil in die Ringnut des Kolbens einsetzbar ist.
Der Ringträger ist vorzugsweise aus Leichtmetall gebildet, jedoch sind auch andere hitzebeständige Werkstoffe wie Stahl oder Kunststoff geeignet. Die Stahlbandlamellen können mit einer in der Ringnut eingelegten Feder zusammenwirken oder aber am Ringrücken des Ringträgers kann eine Feder angeordnet sein.

Die Erfindung ist anhand eines Ausführungsbeispieles in der Zeichnung dargestellt und wird im folgenden näher erläutert.
Es zeigen:
- Figur 1: Ausschnitt eines erfindungsgemäßen Ölabstreifkolbenrings im eingebauten Zustand
- Figur 2: Querschnittsansicht einer alternativen Ausgestaltung des Ölabstreifkolbenringes gemäß Figur 1
- Figur 3: Ansicht eines erfindungsgemäßen Ringträgers
- Figur 4: Alternative Ausgestaltung gemäß Figur 3

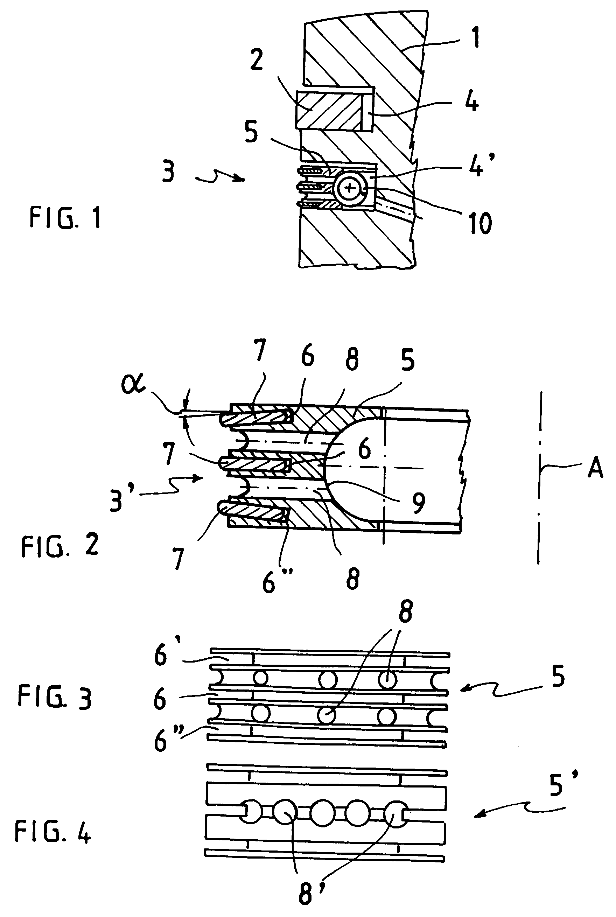

In der Figur 1 ist eine Kolbenringkombination für einen Kolben 1 einer Brennkraftmaschine dargestellt. Der Kolben 1 ist mit einem bekannten Kompressionsring 2 und einem erfindungsgemäßen Ölabstreifkolbenring 3 bestückt. Aufgrund des erfindungsgemäßen Ölabstreifkolbenringes 3 ist der Kolben 1 mit nur zwei Kolbenringnuten 4, 4' ausgebildet.
Der erfindungsgemäße Ölabstreifkolbenring 3, 3' besteht aus einem geschlitzten Ringträger 5 mit mindestens drei axial beabstandeten Ringnuten 6, 6', 6'' (Fig. 2), in denen sich Kolbenringe 7 erstrecken.
Die Kolbenringe 7 sind als Stahlbandlamellen ausgebildet, d. h. die axiale Höhe dieser Kolbenringe liegt bei ca. 0,5 mm.
In der Figur 2 ist dargestellt, dass die Ringnut unter einen Winkel Alpha α zur Kolbenringachse A geneigt verlaufen könnte.
Zwischen den äußeren Stahlbandlamellen 6', 6'' erstrecken sich Ölabflußöffnungen 8, 8'. In den Figuren 3 und 4 sind die Ölabflußöffnungen 8, 8' sowie ihre Lage im Ringträger 5, 5' dargestellt.
Vorzugsweise erstreckt sich am Ringrücken 9 des Ringträgers 5, 5' eine Feder 10 (Figur 1), die den Ringträger 5, 5' radial spreizt, um die Stahlbandlamellen 7 mit definierter Kraft radial an die Zylinderwand (nicht dargestellt) zu pressen.
Denkbar wäre es auch, direkt hiner den Stahlbandlamellen 7 eine Feder in der Ringnut 6, 6', 6'' zu plazieren.

## Patentansprüche

1. Ölabstreifkolbenring für Brennkraftmaschinen mit einem geschlitzten Ringträger für Kolbenringe, dadurch gekennzeichnet, dass der Ringträger (5, 5') mindestens drei axial beabstandete separate Ringnuten (6, 6' ,6'') aufweist, in denen sich mindestens ein Kolbenring (7) erstreckt und dass im Ringträger (5, 5') radial gerichtete Öffnungen (8, 8') angeordnet sind, die als Ölabflußöffnungen fungieren.

2. Ölabstreifkolbenring nach Anspruch 1, dadurch gekennzeichnet, dass die Kolbenringe (7) als Stahlbandlamellen ausgebildet sind.

3. Ölabstreifkolbenring nach Anspruch 1 und 2, dadurch gekennzeichnet, dass mindestens eine der Ringnuten (6, 6' ,6'') unter einem definierten Winkel Alpha zur Ringachse (A) geneigt ist.

4. Ölabstreifkolbenring nach einem der Ansprüche 1 bis 3, dadurch gekennzeichnet, dass die Öffnungen (8, 8') axial zwischen den beiden außenliegenden Ringnuten (6', 6'') angeordnet sind.

5. Ölabstreifkolbenring nach einem der Ansprüche 1 bis 4, dadurch gekennzeichnet, dass der Ringträger (5,5') aus Leichtmetall gebildet ist.

6. Ölabstreifkolbenring nach einem der Ansprüche 1 bis 5, dadurch gekennzeichnet, dass der Ringträger (5,5') selbstfedernd ausgebildet ist.

7. Ölabstreifkolbenring nach einem der Ansprüche 1 bis 6, dadurch gekennzeichnet, dass der Ringträger (5,5') am Ringrücken (9) eine Nut zur Aufnahme einer Feder (10) aufweist.
